# EUROPEAN PATENT SPECIFICATION

(11) **EP 2 985 400 B1**
(45) Date of publication and mention of the grant of the patent: **15.08.2018**
(21) Application number: 14783385.9
(22) Date of filing: 10.04.2014
(51) Int. Cl.: E05B 79/08, E05B 77/10, F16C 11/06

(54) **LINKING STRUCTURE HAVING METAL PIN INTERPOSED BETWEEN METAL LINK AND METAL LEVER**
VERBINDUNGSSTRUKTUR MIT METALLSTIFT ZWISCHEN EINER METALLVERBINDUNG UND EINEM METALLHEBEL
STRUCTURE DE LIAISON QUI COMPORTE UNE BROCHE MÉTALLIQUE AGENCÉE ENTRE UNE LIAISON MÉTALLIQUE ET UN LEVIER MÉTALLIQUE

(30) Priority: 11.04.2013 JP 2013082768
(43) Date of publication of application: 17.02.2016
(73) Proprietor: Aisin Seiki Kabushiki Kaisha, Kariya-shi, Aichi 448-8650 (JP)
(72) Inventor: KOZUKA, Jun, Nishio-shi, Aichi 444-0504 (JP); SUZUMURA, Makoto, Kariya-shi, Aichi 448-8650 (JP); OKADA, Kenji, Kariya-shi, Aichi 448-8650 (JP); NISHIO, Takashi, Kariya-shi, Aichi 448-8650 (JP); SONO, Yasuhiko, Nishio-shi, Aichi 444-0504 (JP)
(74) Representative: TBK
(86) International application number: PCT/JP2014/060420
(87) International publication number: WO 2014/168212

(56) References cited:
- EP-A1- 0 835 976
- EP-A1- 0 893 289
- EP-A2- 0 827 893
- WO-A1-2011/118356
- WO-A2-2012/130218
- DE-A1- 4 005 286
- JP-U- S62 126 471
- JP-U- S62 158 067

## Description

### Technical Field

The present invention relates to a structure for connecting a metal lever and a metal link via a metal pin, and can be used, for example, as a component of a vehicle door locking device (such as a vehicle door lock device, a vehicle closer device, a vehicle remote control device, or a vehicle door handle device).

### Background Art

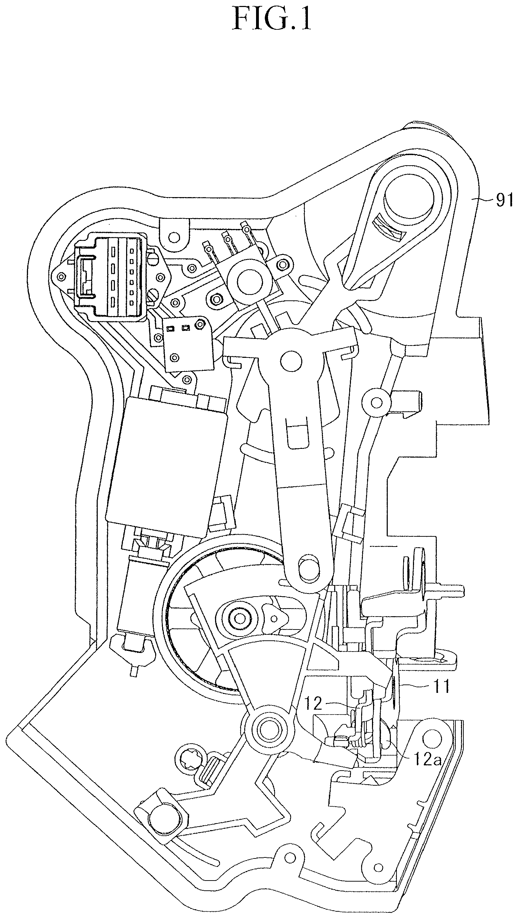

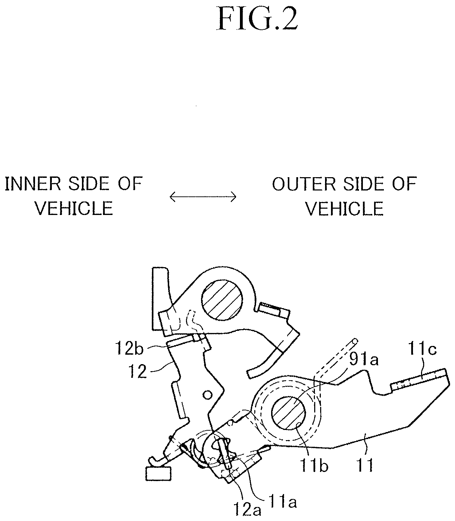

A structure for connecting a metal lever and a metal link to each other is used in, for example, a connecting region between an outside open lever (metal plate lever) and an open link (metal plate link) disclosed in WO 2011/118356 A1. In this connecting structure, as illustrated in FIG. 1 and FIG. 2 of the present application, a connecting leg portion (hook) 12a formed on an open link 12 is inserted and engaged into a noncircular connecting hole portion 11a formed in an outside open lever 11, thereby connecting the outside open lever 11 and the open link 12 to each other. The open link 12 is connected to the outside open lever 11 so as to be rotatable by a necessary amount along a plate surface of the outside open lever 11 (along a surface of the drawing sheet of FIG. 2) under a state in which the open link 12 is capable of swinging about a connecting region between the noncircular connecting hole portion 11a and the connecting leg portion 12a by a predetermined amount in a thickness direction of the outside open lever 11 (direction orthogonal to the surface of the drawing sheet of FIG. 2).

Note that, the outside open lever 11 is pivotably mounted, at a circular support hole 11b formed in an intermediate portion thereof, to a support shaft 91a formed on a housing body 91. In the outside open lever 11, a right end portion 11c illustrated in FIG. 2 serves as an input portion, whereas the above-mentioned noncircular connecting hole portion 11a serves as an output portion. Further, the noncircular connecting hole portion 11a is formed by punching using a press. On the other hand, in the open link 12, the above-mentioned connecting leg portion 12a serves as an input portion, whereas an upper end portion 12b illustrated in FIG. 2 serves as an output portion. Further, the connecting leg portion 12a is formed by a bending process after using a press.

DE 40 05 286 A1 discloses a door of a motor vehicle which is held in the open position by a stay which has one end pivoted to a lug which is attached to the vehicle door. The stay is pivoted to the lug by a bolt which has a shank with a short length of constant diameter adjoining the bolt head. The length of constant diameter runs into a conical part which fits in the bore of a flanged washer. As the nut is tightened the shank of the bolt is forced further into the flanged washer and so reducing the radial clearance between the bolt and washer.

EP 0 835 976 A discloses a device for restraining a vehicle door in a partially or fully open position comprising a tie-rod clamped between a pair of rollers carried by a base. A fixing support articulated to one end of the tie-rod carries an articulation element. The articulation element is formed so as to permit a relative pivoting movement between the tie-rod and the fixing support about an axis substantially perpendicular to the articulation axis.

### Summary of Invention

### (Problem to be solved by the invention)

Incidentally, in the structure for connecting the metal lever (outside open lever 11) and the metal link (open link 12) to each other disclosed in WO 2011/118356 A1, the connecting leg portion (hook) 12a formed on the metal link (12) is inserted and engaged into the noncircular connecting hole portion 11a formed in the metal lever (11), thereby mounting the metal link to the metal lever. Accordingly, this structure is advantageous in that the structure is simple and can be manufactured at low cost. However, the connecting leg portion (hook) 12a comes off the noncircular connecting hole portion 11a easily at the time of assembly, and hence improvement in mountability is desired.

### (Means for solving the problem)

In order to solve the above-mentioned problem, according to the present invention, there is provided a structure for connecting a metal lever and a metal link via a metal pin, said structure comprising: a metal lever having a circular connecting hole; a metal pin comprising a support shaft portion, a head portion and a connecting shaft portion; and a metal link having a coupling hole and being integrally connected to said metal pin, said coupling hole being fitted to said connecting shaft portion. The support shaft portion is insertable through said connecting hole, and is pivotable and movable in an axial direction of said metal pin by a preset amount with respect to said connecting hole. The head portion is formed at one end portion of said support shaft portion and has a diameter larger than a diameter of said support shaft portion. The connecting shaft portion is formed at the other end portion of said support shaft portion and has a diameter smaller than said diameter of said support shaft portion. The metal pin comprises an allowable portion formed on at least one axial end portion of said support shaft portion of said metal pin. The allowable portion is configured to increase an amount of swing of said metal lever on said metal pin in said axial direction of said metal pin, and the allowable portion is formed so that only said one axial end portion of said support shaft portion of said metal pin has a diameter smaller than that of a center portion of said support shaft portion. Only said one axial end portion has a curved surface shape in radial cross-section, and said structure further comprising a second allowable portion formed as a chamfered portion or a rounded portion on the other axial end portion of said connecting hole of said metal lever, and said second allowable portion being configured to increase said amount of swing of said metal lever on said metal pin in said axial direction of said metal pin.

### (Actions and effects)

In the above-mentioned connecting structure according to the present invention, the allowable portion is formed on one axial end portion of the support shaft portion of the metal pin, and is configured to increase the amount of swing of the metal lever on the metal pin in the axial direction of the metal pin. Accordingly, the amount of swing of the metal lever on the metal pin in the axial direction of the metal pin can be ensured in a necessary and sufficient manner while minimizing a radial gap between the support shaft portion of the metal pin and the connecting hole of the metal lever at an axial intermediate portion of the support shaft portion of the metal pin.

Incidentally, in the connecting structure according to the present invention, the metal lever and the metal link are connected to each other via the metal pin, and the metal pin includes the support shaft portion pivotable and movable in the axial direction of the metal pin by the preset amount with respect to the connecting hole of the metal lever, the head portion (portion capable of preventing the metal lever from coming off the support shaft portion) being formed at one end portion of the support shaft portion and having the diameter larger than the diameter of the support shaft portion, and the connecting shaft portion (to which the metal link is integrally connected at the coupling hole after the metal lever is mounted onto the support shaft portion) being formed at the other end portion of the support shaft portion and having the diameter smaller than the diameter of the support shaft portion.

Accordingly, under a state in which the metal lever and the metal link are connected to each other via the metal pin, the metal lever is sandwiched and retained between the metal link (connected to the connecting shaft portion of the metal pin) and the head portion of the metal pin. Therefore, under a state in which the metal lever and the metal link are connected to each other via the metal pin, the metal lever and the metal link do not easily come off the metal pin, and mountability at the time of assembly can be improved.

A second allowable portion (chamfered portion such as a C beveled portion or a R beveled portion (a rounded portion)) for increasing the amount of swing of the metal lever on the metal pin in the axial direction of the metal pin is formed on the other axial end portion of the connecting hole of the metal lever. In this case, the above-mentioned second allowable portion (chamfered portion such as a C beveled portion or a R beveled portion (a rounded portion)) is configured to increase the amount of swing of the metal lever on the metal pin in the axial direction of the metal pin.

Further, when embodying the present invention, the allowable portion is formed so that only the one axial end portion of the support shaft portion of the metal pin has a diameter smaller than that of a center portion of the support shaft portion and only the one axial end portion has a curved surface shape in radial cross-section. In this case, the amount of swing of the metal lever to the one axial end portion side can be larger than the amount of swing to the other axial end portion side. Accordingly, a large amount of swing can be set only for a direction requiring swing.

Further, in an embodiment not being part of the claimed invention, the allowable portion can be formed so that the entire support shaft portion has a curved surface shape and a center portion of the support shaft portion of the metal pin has a maximum diameter in the support shaft portion. In this case, the amount of swing of the metal lever can be further larger than the above-mentioned case. Further, in this case, the amount of swing to the one axial end portion side and the amount of swing to the other axial end portion side can be increased equally. In this case, the allowable portion can be formed so that the support shaft portion of the metal pin has an arc shape in radial cross-section. In this case, the above-mentioned arc shape (spherical outer shape) enables the metal lever to swing more smoothly.

Further, in an embodiment not being part of the claimed invention, the metal link or the metal lever can include a protrusion regulating a swinging direction of the metal lever to a specific direction when the metal lever swings on the metal pin in the axial direction of the metal pin. In this case, an abutment portion between the metal lever and the protrusion formed on the metal link, or an abutment portion between the metal link and the protrusion formed on the metal lever can serve as a swinging fulcrum. Accordingly, the swinging direction of the metal lever on the metal pin can be stabilized. Note that, it is desired that the above-mentioned protrusion be formed as a straight protrusion extending in a radial direction of the metal pin, and the present invention can be embodied even when the above-mentioned protrusion is formed of a point-like protrusion.

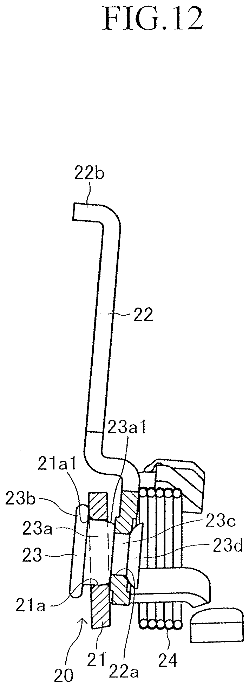

Further, when embodying the present invention, a second allowable portion for increasing the amount of swing of the metal lever on the metal pin in the axial direction of the metal pin is formed on the other axial end portion of the connecting hole of the metal lever. In this case, the amount of swing of the metal lever to the one axial end portion side (amount of swing in a case illustrated in FIG. 12 described later) can be larger than the amount of swing to the other axial end portion side. Accordingly, a large amount of swing can be set only for a direction requiring swing of the metal lever.

### Brief Description of Drawings

FIG. 1 is a side view for illustrating a related-art structure for connecting a metal lever and a metal link to each other (an example applied to a vehicle door lock device).
FIG. 2 is a back view for illustrating a relationship between the metal lever (outside open lever) and the metal link (open link) illustrated in FIG. 1.
FIG. 3 is a front view for illustrating a connecting structure according to an embodiment being not part of the claimed invention.
FIG. 4 is a sectional view taken along the line 4-4 of FIG. 3.
FIG. 5 is a sectional view taken along the line 5-5 of FIG. 3.
FIG. 6 is a sectional view for illustrating a state in which an outside open lever illustrated in FIG. 4 is moved to a left end in FIG. 6.
FIG. 7 is a sectional view for illustrating a state in which an open link and a connecting pin (metal pin) swings clockwise with respect to the outside open lever illustrated in FIG. 4.
FIG. 8 is a sectional view for illustrating a state in which the open link and the connecting pin swings counterclockwise with respect to the outside open lever illustrated in FIG. 4.
FIG. 9 is a front view for illustrating a connecting structure according to an embodiment of the present invention.
FIG. 10 is a sectional view corresponding to FIG. 4, for illustrating the embodiment illustrated in FIG. 9.
FIG. 11 is a sectional view corresponding to FIG. 6, for illustrating the embodiment illustrated in FIG. 9.
FIG. 12 is a sectional view corresponding to FIG. 7, for illustrating the embodiment illustrated in FIG. 9.

### Description of Embodiments

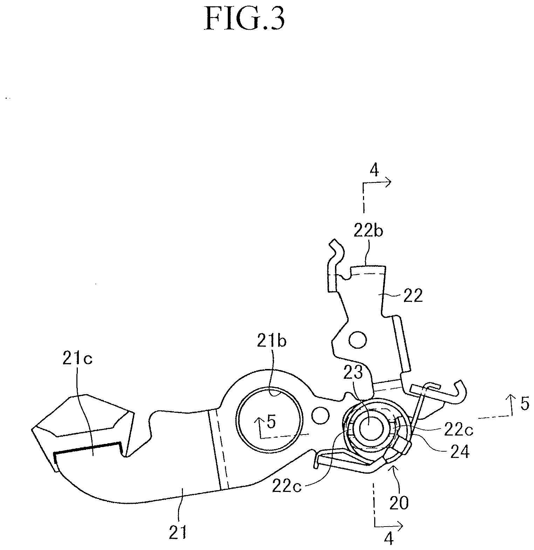

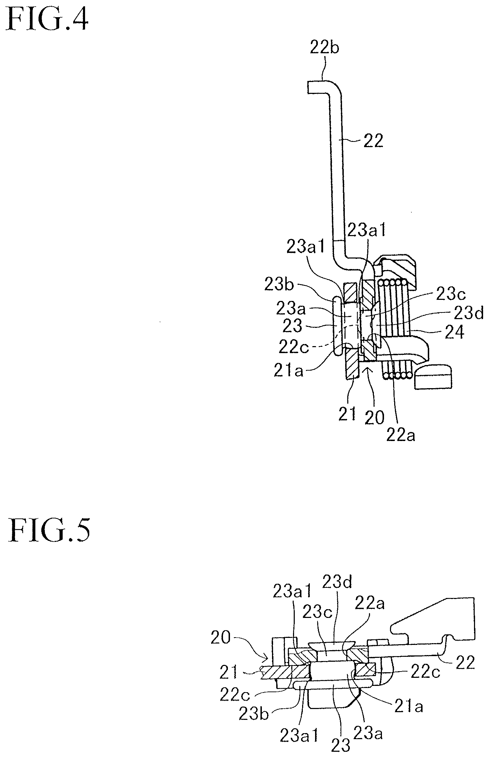

An embodiment of the present invention will be discussed with reference to the drawings. FIG. 3 to FIG. 8 are illustrations of a connecting structure according to an embodiment being not part of the claimed invention, which is used as a component of a vehicle door lock device. In a connecting structure 20 according to this embodiment, an outside open lever (metal plate lever) 21 and an open link (metal plate link) 22 are connected to each other via (by) a metal connecting pin 23. Further, in the connecting structure 20, a torsion spring 24 is interposed between the outside open lever 21 and the open link 22, and the open link 22 is biased so that the open link 22 rotates clockwise in FIG. 3 and swings clockwise in FIG. 4 with respect to the outside open lever 21.

The outside open lever 21 has a circular connecting hole 21a (see FIG. 4) formed in a distal end portion thereof, and has a circular support hole 21b (see FIG. 3) formed in an intermediate portion thereof. Similarly to the outside open lever of the related art, the outside open lever 21 is configured so as to be pivotably mounted at the circular support hole 21b to a support shaft (not shown) of a housing body (not shown). A left end portion 21c of the outside open lever 21 illustrated in FIG. 3 serves as an input portion, whereas a region of the outside open lever 21, in which the above-mentioned circular connecting hole 21a is formed, serves as an output portion. Note that, at least an operation force of an outside handle, which is arranged on an outer side of a door of a vehicle, is input to the left end portion 21c. As a matter of course, an operation force of an inside handle, which is arranged on an inner side of the door of the vehicle, can be input to the left end portion 21c.

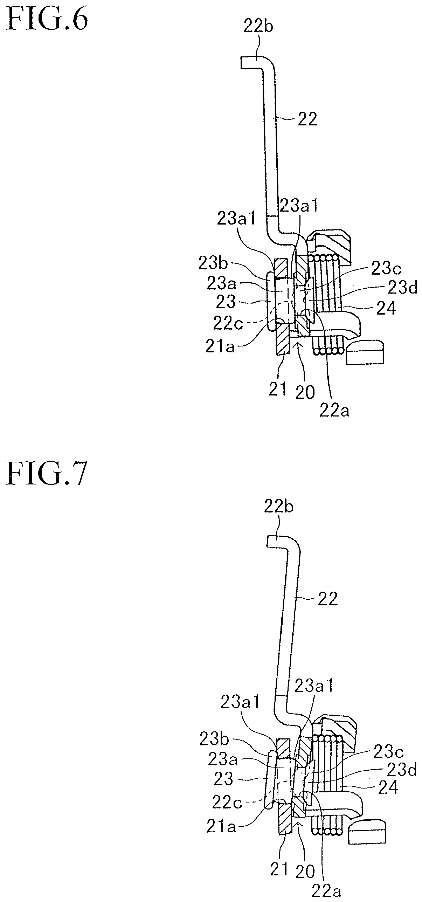

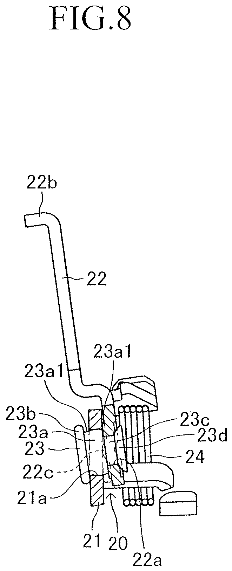

The open link 22 includes a region, which has a circular coupling hole 22a formed in a lower end portion thereof illustrated in FIG. 3, serves as an input portion, whereas an upper end portion 22b of the open link 22 illustrated in FIG. 3 serves as an output portion. The coupling hole 22a of the open link 22 is fitted into the connecting pin 23, and is integrally connected to the connecting pin 23. Further, the open link 22 includes a pair of straight protrusions 22c extending in a radial direction (horizontal direction in FIG. 3) of the connecting pin 23. Each of the straight protrusions 22c is configured to regulate a swinging direction of the outside open lever 21 to a specific direction (lateral direction in illustrations of FIG. 7 and FIG. 8) when the outside open lever 21 swings on the connecting pin 23 in an axial direction (see FIG. 7 and FIG. 8). When the open link 22 and the connecting pin 23 swing with respect to the outside open lever 21 as illustrated in FIG. 7 and FIG. 8, an abutment portion between the outside open lever 21 and each straight protrusion 22c formed on the open link 22 serves as a swinging fulcrum. Each straight protrusion 22c is formed by press working when the open link 22 is produced by press working. Note that, the upper end portion 22b outputs an input operation force to a latch mechanism which can retain the door on the vehicle body by engaging with a striker arranged on the door of the vehicle.

A support shaft portion 23a is formed in an axial intermediate region of the connecting pin 23. A head portion 23b is formed at one end portion (left end portion illustrated in FIG. 4) of the support shaft portion 23a, whereas a connecting shaft portion 23c and a swaging fixing portion 23d are formed at the other end portion (right end portion illustrated in FIG. 4) of the support shaft portion 23a. The support shaft portion 23a can be inserted through the connecting hole 21a of the outside open lever 21 (the support shaft portion 23a has an outer diameter smaller than an inner diameter of the connecting hole 21a). The support shaft portion 23a is pivotable and movable in the axial direction by a preset amount with respect to the connecting hole 21a. A spherical curved surface 23a1 (a curvature of the spherical curved surface 23a1 can be set as appropriate) is formed on each axial end portion (each lateral end portion illustrated in FIG. 4) of the support shaft portion 23a. The spherical curved surface 23a1 serves as an allowable portion for increasing an amount of swing of the outside open lever 21 on the connecting pin 23 in the axial direction.

The head portion 23b has a diameter larger than that of the support shaft portion 23a, and larger than the inner diameter of the connecting hole 21a of the outside open lever 21. Each vertical end portion of the head portion 23b illustrated in FIG. 4 is cut off by a predetermined amount so that a vertical length of the head portion 23b in FIG. 4 is smaller than a lateral length thereof in FIG. 5 by a predetermined amount. The connecting shaft portion 23c has a diameter smaller than that of the support shaft portion 23a. The connecting shaft portion 23c can be inserted through the connecting hole 21a of the outside open lever 21, and can be fitted into the coupling hole 22a of the open link 22. The swaging fixing portion 23d has a diameter smaller than that of the connecting shaft portion 23c before the swaging fixing portion 23d is swaged. After the connecting shaft portion 23c and the support shaft portion 23a are inserted through the outside open lever 21 and the open link 22 is fitted to the connecting shaft portion 23c, the swaging fixing portion 23d is swaged so as to have a diameter larger than that of the connecting shaft portion 23c. In this manner, the open link 22 is prevented from coming off.

In this unclaimed embodiment configured as described above, each axial end portion of the support shaft portion 23a of the connecting pin 23 includes the allowable portion (spherical curved surfaces 23a1) for increasing the amount of swing of the outside open lever 21 on the connecting pin 23 in the axial direction. Accordingly, the amount of swing of the outside open lever 21 on the connecting pin 23 in the axial direction can be ensured in a necessary and sufficient manner while minimizing a radial gap between the support shaft portion 23a of the connecting pin 23 and the connecting hole 21a of the outside open lever 21 at an axial intermediate portion of the support shaft portion 23a of the connecting pin 23.

Incidentally, in the connecting structure 20 according to this unclaimed embodiment, the outside open lever 21 and the open link 22 are connected to each other via the connecting pin 23, and the connecting pin 23 includes the support shaft portion 23a pivotable and movable in the axial direction by the preset amount with respect to the connecting hole 21a of the outside open lever 21, the head portion 23b (portion capable of preventing the outside open lever 21 from coming off the support shaft portion 23a) being formed at one end portion of the support shaft portion 23a and having a diameter larger than that of the support shaft portion 23a, and the connecting shaft portion 23c and the swaging fixing portion 23d (to which the open link 22 is integrally connected at the coupling hole 22a after the outside open lever 21 is mounted to the support shaft portion 23a) formed at the other end portion of the support shaft portion 23a.

Accordingly, under a state in which the outside open lever 21 and the open link 22 are connected to each other via the connecting pin 23, the outside open lever 21 is sandwiched and retained between the open link 22 and the head portion 23b of the connecting pin 23. Therefore, under a state in which the outside open lever 21 and the open link 22 are connected to each other via the connecting pin 23, the outside open lever 21 and the open link 22 do not easily come off the connecting pin 23, and hence mountability at the time of assembly can be improved.

Further, in the connecting structure 20, the support shaft portion 23a of the connecting pin 23 insertable through the connecting hole 21a of the outside open lever 21, and the connecting shaft portion 23c of the connecting pin 23 fitted into the coupling hole 22a of the open link 22 to be connected to the open link 22 can be produced by machining with high accuracy. Thus, the radial gap between the support shaft portion 23a of the connecting pin 23 and the connecting hole 21a of the outside open lever 21 can be produced with high accuracy. Furthermore an axial gap between the outside open lever 21, which is sandwiched and retained between the open link 22 and the head portion 23b of the connecting pin 23, and the open link 22, and an axial gap between the outside open lever 21 and the head portion 23b can be produced with high accuracy. As a result, improvement in accuracy can be achieved.

Further, in the connecting structure 20 , the open link 22 includes the straight protrusions 22c for regulating the swinging direction of the outside open lever 21 to the specific direction when the outside open lever 21 swings on the connecting pin 23 in the axial direction. Thus, the abutment portion between the outside open lever 21 and each of the straight protrusions 22c formed on the open link 22 can be set as the swinging fulcrum, and the swinging direction of the outside open lever 21 on the connecting pin 23 can be stabilized. Further, in the connecting structure 20, the support shaft portion 23a of the connecting pin 23 is formed into an arc shape in radial cross-section (spherical outer shape). Accordingly, the outside open lever 21 can be smoothly swung on the connecting pin 23.

Note that, the connecting structure 20 illustrated in FIG. 3 to FIG. 8 is obtained by adopting the straight protrusions 22c as a protrusion for regulating the swinging direction of the outside open lever 21 to the specific direction when the outside open lever 21 swings on the connecting pin 23 in the axial direction. However, the protrusion can be a point-like protrusion. Further, in the connecting structure 20 illustrated in FIG. 3 to FIG. 8, the open fink 22 includes the straight protrusions 22c. However, a protrusion (protrusion capable of abutting on the open link 22) corresponding to each of the straight protrusions 22c can be formed on the open link 22 side of the outside open lever 21.

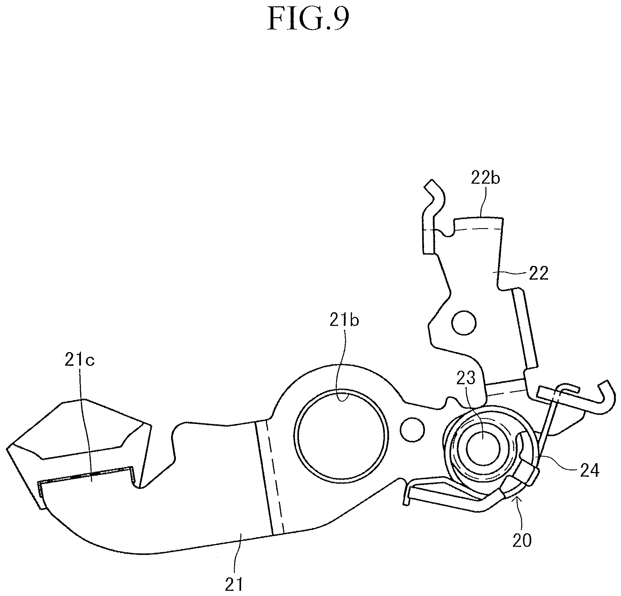

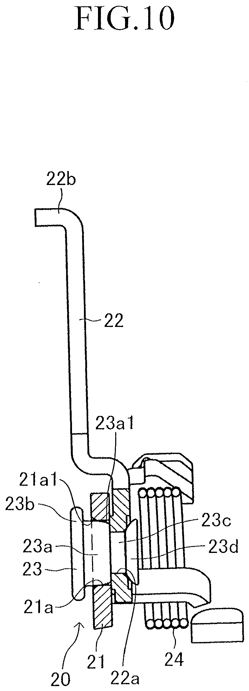

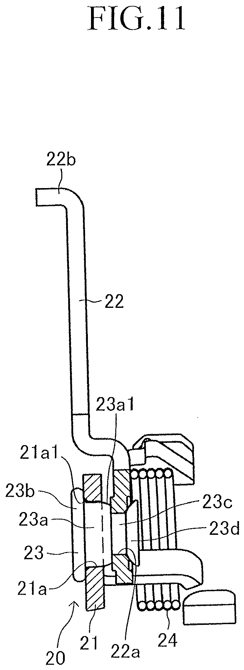

In the above-mentioned unclaimed embodiment, the connecting pin 23 includes the connecting shaft portion 23c and the swaging fixing portion 23d. However, when the open link 22 can be firmly fitted and fixed onto the connecting shaft portion 23c of the connecting pin 23, the swaging fixing portion 23d can be omitted. Further, in the above-mentioned unclaimed embodiment, the spherical curved surfaces 23a1 serving as the allowable portion are formed on each axial end portion of the support shaft portion 23a of the connecting pin 23. However, as in a case of an embodiment being covered by the present invention illustrated in FIG. 9 to FIG. 12, the spherical curved surface 23a1 serving as the allowable portion can be formed on one axial end portion (right end portion illustrated in FIG. 10) of the support shaft portion 23a of the connecting pin 23, and a chamfered portion 21a1 (C beveled portion or R beveled portion (rounded portion)) serving as a second allowable portion for increasing the amount of swing of the outside open lever 21 on the connecting pin 23 in the axial direction can be formed on the other axial end portion (left end portion illustrated in FIG. 10) of the connecting hole 21a of the outside open lever 21. In the embodiment illustrated in FIG. 9 to FIG. 12, the amount of swing to the one axial end portion side (amount of swing in a case illustrated in FIG. 12) can be larger than the amount of swing to the other axial end portion side. Accordingly, a large amount of swing can be set only for a direction requiring swing.

Further, a configuration of the connecting structure 20 according to
the embodiment illustrated in FIG. 9 to FIG. 12 is obtained without forming the straight protrusions 22c on the open link 22. The configuration of the connecting structure 20 illustrated in FIG. 9 to FIG. 12 excluding the above-mentioned matter is substantially the same as the configuration of the connecting structure 20 illustrated in FIG. 3 to FIG. 8. Thus, the same configurations (components) are denoted by the same reference symbols, and description thereof is omitted. Note that, when obtaining the connecting structure 20 illustrated in FIG. 9 to FIG. 12, the spherical curved surface 23a1 serving as the allowable portion can be formed on the other axial end portion (left end portion illustrated in FIG. 10) of the support shaft portion 23a of the connecting pin 23, and the chamfered portion 21a1 (C beveled portion or R beveled portion (rounded portion)) for increasing the amount of swing of the outside open lever 21 on the connecting pin 23 in the axial direction can be formed on one axial end portion (right end portion illustrated in FIG. 10) of the connecting hole 21a of the outside open lever 21. In this case, the amount of swing to the one axial end portion side and the amount of swing to the other axial end portion side can be increased equally.

Further, in the above-mentioned embodiments, the spherical curved surface 23a1 serves as the allowable portion (allowable portion for increasing the amount of swing of the outside open lever 21 on the connecting pin 23 in the axial direction) formed on the connecting pin 23. However, the above-mentioned allowable portion only needs to have the radial cross-section having a curved surface shape (a curvature of the curved surface can be set as appropriate), and is not limited to the shape according to the above-mentioned embodiments.

Further, in the above-mentioned embodiments, the connecting structure 20 according to the present invention serves as a component of the vehicle door lock device. However, the connecting structure according to the present invention can be used as a component of vehicle door locking devices (such as a vehicle closer device, a vehicle remote control device, and a vehicle door handle device) except for the vehicle door lock device, and is not limited to the configuration according to the above-mentioned embodiments.

## Claims

1. A structure (20) for connecting a metal lever (21) and a metal link (22) via a metal pin (23), said structure (20) comprising:
a metal lever (21) having a circular connecting hole (21a);
a metal pin (23) comprising a support shaft portion (23a), a head portion (23b) and a connecting shaft portion (23c); and
a metal link (22) having a coupling hole (22a) and being integrally connected to said metal pin (23), said coupling hole (22a) being fitted to said connecting shaft portion (23c);
wherein said support shaft portion (23a) is insertable through said connecting hole (21a), and is pivotable and movable in an axial direction of said metal pin (23) by a preset amount with respect to said connecting hole (21a),
said head portion (23b) is formed at one end portion of said support shaft portion (23a) and has a diameter larger than a diameter of said support shaft portion (23a),
said connecting shaft portion (23c) is formed at the other end portion of said support shaft portion (23a) and has a diameter smaller than said diameter of said support shaft portion (23a), and
said metal pin (23) comprises an allowable portion (23a1) formed on at least one axial end portion of said support shaft portion (23a) of said metal pin (23),
said allowable portion (23a1) is configured to increase an amount of swing of said metal lever (21) on said metal pin (23) in said axial direction of said metal pin (23), and
said allowable portion (23a1) is formed so that only said one axial end portion of said support shaft portion (23a) of said metal pin (23) has a diameter smaller than that of a center portion of said support shaft portion (23a)
**characterized in that**
only said one axial end portion has a curved surface shape in radial cross-section, and
said structure further comprising a second allowable portion (21a1) formed as a chamfered portion or a rounded portion on the other axial end portion of said connecting hole (21a) of said metal lever (21), and said second allowable portion (21a1) being configured to increase said amount of swing of said metal lever (21) on said metal pin (23) in said axial direction of said metal pin (23).

## Patentansprüche

1. Struktur (20) zum Verbinden eines Metallhebels (21) und einer Metallverbindung (22) über einen Metallstift (23), wobei die Struktur (20) Folgendes aufweist:
einen Metallhebel (21) mit einem kreisförmigen Verbindungsloch (21a) ;
einen Metallstift (23), der einen Stützschaftabschnitt (23a), einen Kopfabschnitt (23b) und einen Verbindungsschaftabschnitt (23c) aufweist; und
eine Metallverbindung (22), die ein Kopplungsloch (22a) hat und einstückig mit dem Metallstift (23) verbunden ist, wobei das Kopplungsloch (22a) an den Verbindungsschaftabschnitt (23c) gepasst ist;
wobei der Stützschaftabschnitt (23a) durch das Verbindungsloch (21a) einsetzbar ist und drehbar und in einer axialen Richtung des Metallstifts (23) um einen voreingestellten Betrag hinsichtlich des Verbindungslochs (21a) beweglich ist,
der Kopfabschnitt (23b) an einem Endabschnitt des Stützschaftabschnitts (23a) ausgebildet ist und einen Durchmesser hat, der größer als ein Durchmesser des Stützschaftabschnitts (23a) ist,
der Verbindungsschaftabschnitt (23c) an dem anderen Endabschnitt des Stützschaftabschnitts (23a) ausgebildet ist und einen Durchmesser hat, der kleiner als der Durchmesser des Stützschaftabschnitts (23a) ist, und
der Metallstift (23) einen Erlaubnisabschnitt (23a1) aufweist, der an zumindest einem Endabschnitt des Stützschaftabschnitts (23a1) des Metallstifts (23) ausgebildet ist,
der Erlaubnisabschnitt (23a1) gestaltet ist, um einen Schwingbetrag des Metallhebels (21) auf dem Metallstift (23) in der axialen Richtung des Metallstifts (23) zu vergrößern, und
der Erlaubnisabschnitt (23a1) derart ausgebildet ist, dass lediglich der eine axiale Endabschnitt des Stützschaftabschnitts (23a) des Metallstifts (23) einen Durchmesser hat, der kleiner als jener eines Mittelabschnitts des Stützschaftabschnitts (23a) ist,
**dadurch gekennzeichnet, dass**
lediglich der eine axiale Endabschnitt eine gebogene Flächenform in einem radialen Querschnitt hat, und
der Aufbau ferner einen zweiten Erlaubnisabschnitt (21a1) aufweist, der als ein abgefaster Abschnitt oder ein abgerundeter Abschnitt an dem anderen axialen Endabschnitt des Verbindungslochs (21a) des Metallhebels (21) ausgebildet ist, und der zweite Erlaubnisabschnitt (21a1) gestaltet ist, um den Schwingbetrag des Metallhebels (21) auf den Metallstift (23) in der axialen Richtung des Metallstifts (23) zu vergrößern.

## Revendications

1. Structure (20) pour raccorder un levier métallique (21) et une liaison métallique (22) via une broche métallique (23), ladite structure (20) comprenant :
un levier métallique (21) ayant un trou de raccordement circulaire (21a) ;
une broche métallique (23) comprenant une partie d'arbre de support (23a), une partie de tête (23b) et une partie d'arbre de raccordement (23c) ; et
une liaison métallique (22) ayant un trou de couplage (22a) et étant raccordée, de manière solidaire, à ladite broche métallique (23), ledit trou de couplage (22a) étant monté sur ladite partie d'arbre de raccordement (23c) ;
dans laquelle ladite partie d'arbre de support (23a) peut être insérée à travers ledit trou de raccordement (21a) et peut pivoter et se déplacer dans une direction axiale de ladite broche métallique (23) selon une quantité prédéterminée par rapport audit trou de raccordement (21a),
ladite partie de tête (23b) est formée au niveau d'une partie d'extrémité de ladite partie d'arbre de support (23a) et a un diamètre supérieur à un diamètre de ladite partie d'arbre de support (23a),
ladite partie d'arbre de raccordement (23c) est formée au niveau de l'autre partie d'extrémité de ladite partie d'arbre de support (23a) et a un diamètre inférieur audit diamètre de ladite partie d'arbre de support (23a), et
ladite broche métallique (23) comprend une partie admissible (23a1) formée sur au moins une partie d'extrémité axiale de ladite partie d'arbre de support (23a) de ladite broche métallique (23),
ladite partie admissible (23a1) est configurée pour augmenter une quantité d'oscillation dudit levier métallique (21) sur ladite broche métallique (23) dans ladite direction axiale de ladite broche métallique (23), et
ladite partie admissible (23a1) est formée de sorte que seule ladite une partie d'extrémité axiale de ladite partie d'arbre de support (23a) de ladite broche métallique (23) a un diamètre inférieur à celui d'une partie centrale de ladite partie d'arbre de support (23a),
**caractérisée en ce que** :
seule ladite une partie d'extrémité axiale a une forme de surface incurvée en section transversale radiale, et
ladite structure comprenant en outre une seconde partie admissible (21a1) formée comme une partie chanfreinée ou une partie arrondie sur l'autre partie d'extrémité axiale dudit trou de raccordement (21a) dudit levier métallique (21), et ladite seconde partie admissible (21a1) étant configurée pour augmenter ladite quantité d'oscillation dudit levier métallique (21) sur ladite broche métallique (23) dans ladite direction axiale de ladite broche métallique (23).
